# EUROPEAN PATENT APPLICATION

(11) **EP 4 545 917 A1**
(43) Date of publication of application: **30.04.2025**
(21) Application number: 24207938.2
(22) Date of filing: 21.10.2024
(51) Int. Cl.: G01H 1/00

(54) **VIBRATION MONITORING SYSTEM**

(30) Priority: 27.10.2023 GB 202316504
(71) Applicant: Terex GB Limited, Dungannon, Northern Ireland BT71 4DR (GB)
(72) Inventor: FANNING, Ciaran, Belfast, BT9 5QW (GB); MURPHY, Glenn, Craigavon, BT65 5BH (GB)
(74) Representative: FRKelly

(57) **Abstract**

A vibration monitoring system comprises a plurality of sensor units locatable on an apparatus to be monitored at a respective different location. The system causes each sensor unit to take a respective measurement simultaneously, and the sensor units are configured to synchronize with each other before taking the respective measurement. The sensor units synchronize with each other by synchronizing with an external reference time source, e.g. a GPS clock. The synchronized measurements may be used to analyse the operation and/or condition of the apparatus being monitored, for example to determine if the apparatus is operating at or near to a designated critical frequency, and/or to identify an operational mode of the apparatus. The analysis may involve determining phase relationships between movement of the apparatus at the respective sensor unit locations.

## Description

### Field of the Invention

This invention relates to monitoring systems for vibrating apparatus, especially but not exclusively vibratory screening apparatus.

### Background to the Invention

It is desirable to monitor the vibrations of a vibrating apparatus such as a vibratory screening apparatus in order to monitor the operational performance of the apparatus and/or the structural condition of the apparatus. To this end it is known to provide monitoring systems that comprise vibration sensors for mounting on the apparatus.

Typical vibration monitoring systems for screening apparatus focus on analysing the screen's behaviour via individual location tests, in isolation, to understand vibration patterns and effects. The monitoring and analysis is normally performed with the goal of minimising vibration in rotating machinery or determining the condition of components, e.g. bearings, in such a system. The analysis that can be performed using data gathered by such monitoring systems is limited. For example, vibration monitoring systems that measure vibrations at different times in different locations do not allow analysis of phase-related aspects of the screen's vibration.

It would be desirable to provide an improved vibration monitoring system that mitigates the problem outlined above.

### Summary of the Invention

For vibratory apparatus, including vibratory screening apparatus, it is advantageous to monitor vibrations at multiple locations simultaneously. This allows phase-related aspects of the apparatus' movement to be determined, which is beneficial since, for example, for a vibratory screening apparatus to operate optimally, it is desirable that vibrations at different locations are in phase, or at least have a desired phase relationship. It is desirable for the measurements at multiple locations to be synchronised precisely to allow identification of high frequency signs or other indications of hazardous or damaging vibrating screen performance.

Accordingly, from one aspect the invention provides a vibration monitoring system comprising a plurality of sensor units, each sensor unit comprising at least one vibration sensor and being locatable on an apparatus to be monitored at a respective different location, wherein each sensor unit is operable to take measurements using the respective at least one vibration sensor, the system being configured to cause each sensor unit to take a respective measurement simultaneously, and wherein the sensor units are configured to synchronize with each other before taking the respective measurement.

In preferred embodiments, the system is configured to generate an activation request and to communicate the activation request to each of the sensor units, and wherein, in response to receiving the activation request, each sensor unit is configured to synchronize with the, or each, other sensor unit.

Preferably, the system is configured to generate a measurement time and to communicate the measurement time to each of the sensor units, and wherein each sensor unit is configured to take the respective measurement at the measurement time. Preferably, the system is configured to set the measurement time to occur after the generation of said activation request by a period of time that allows the sensor units to synchronize with each other before taking the respective measurement. The system may be configured to generate the measurement time in response to generation of the activation request, or in response to receipt of the activation request by one or more of the sensor units.

The measurement time may be generated by one of the sensor units, and preferably communicated to the, or each, other sensor unit directly or indirectly by said one of the sensor units. The activation request may be received by said one of the sensor units and communicated to the, or each, other sensor unit directly or indirectly by said one of the sensor units.

In preferred embodiments, the system includes a controller, the controller being configured for communication, preferably wireless communication, with at least one of, and preferably all of, the sensor units, and wherein the controller is preferably separate from the sensor units, for example comprising a separate computing device, preferably a separate portable computing device, for example a smartphone, a tablet computer or a laptop computer. The controller is preferably configured for wireless communication with at least one of, and preferably all of, the sensor units via a direct wireless communication link, preferably a WiFi link. More generally, the controller may be configured for wireless communication with at least one of, and preferably all of, the sensor units via a direct wireless communication link, for example via WiFi (or other wireless LAN communication), Bluetooth (or other personal area network (PAN) wireless communication), Zigbee (or other wireless sensor network communication). Preferably, the controller is configured to generate said activation request and to communicate said activation request to at least one of said sensor units, preferably to all of said sensor units, and wherein, typically, the controller is configured to generate said activation request in response to user input. The direct wireless communication advantageously does not use external or separate communication networking means, e.g. a router, gateway, access point, internet connection or the like.

In preferred embodiments, the sensor units are configured to synchronize with each other by synchronizing with an external reference time source, and wherein each sensor unit preferably includes means for communicating with the external reference time source, e.g. a GPS receiver or other precision network that provides a reference time source. Typically, each sensor unit has an internal clock, and is configured to synchronize with the, or each, other sensor unit by synchronizing the internal clock with the external time reference source.

Preferably, each sensor unit is configured to take the respective measurement within a sampling window, the sampling window being the same for each sensor unit. The sampling window may be defined with respect to the measurement time, preferably beginning at said measurement time.

Optionally, each sensor unit is configured for wireless communication with at least one other sensor unit, preferably via a direct wireless communication link, and wherein the wireless communication is preferably WiFi communication. More generally, each sensor unit may be configured for wireless communication with at least one other sensor unit, preferably via a direct wireless communication link, and wherein the wireless communication is for example via WiFi (or other wireless LAN communication), Bluetooth (or other personal area network (PAN) wireless communication), Zigbee (or other wireless sensor network communication). The direct wireless communication advantageously does not use external or separate communication networking means, e.g. a router, gateway, access point, internet connection or the like.

In preferred embodiments, the system is configured to use the respective measurements from at least one of, preferably at least two of, and optionally all of, the sensor units to analyse the operation and/or condition of the apparatus being monitored, for example to determine if the apparatus is operating at or near to a designated critical frequency, and/or to identify an operational mode of the apparatus and/or to identify undesirable structural conditions in the apparatus.

Advantageously, the system is configured to use the respective simultaneously taken measurements from two or more of the sensor units to determine one or more phase relationship between movement of the apparatus at the respective sensor unit locations. Optionally, the system is configured to use respective simultaneously taken measurements from two or more of the sensor units to determine the relationship between one or more characteristic of the movement, in particular the vibratory movement, of the apparatus at the respective sensor unit locations, wherein the characteristic(s) may include any one or more of phase, magnitude, direction and frequency.

From another aspect, the invention provides the system of the first aspect installed on an apparatus to be monitored, wherein each sensor unit is removably mounted on the apparatus at a respective different location. In alternative embodiments, the sensor units may be permanently fixed to, or incorporated into, the apparatus to be monitored. The apparatus may be a screening apparatus or other vibratory apparatus.

From another aspect the invention provides a monitoring method using a vibration monitoring system comprising a plurality of sensor units, each sensor unit comprising at least one vibration sensor and being operable to take measurements using the respective at least one vibration sensor, the method comprising: locating each sensor unit at a respective different location on an apparatus to be monitored; causing each sensor unit to take a respective measurement simultaneously; and causing the sensor units to synchronize with each other before taking the respective measurement. Causing the sensor units to synchronize with each other preferably involves causing the sensor units to synchronise with an external reference time source.

In preferred embodiments, the method includes, in response to an activation request, communicating to each sensor unit a measurement time at which the sensor units are to simultaneously take the respective measurement, and preferably, calculating said measurement time such that the sensor units are able to synchronise with each other before the measurement time.

The preferred method includes using the respective measurements from at least one of, preferably at least two of, and optionally all of, the sensor units to analyse the operation and/or condition of the apparatus being monitored, for example to determine if the apparatus is operating at or near to a designated critical frequency, and/or to identify an operational mode of the apparatus.

The preferred method includes using the respective simultaneously taken measurements from two or more of the sensor units to determine one or more phase relationship between movement of the apparatus at the respective sensor unit locations.

The invention is not limited to use with screening apparatus and may alternatively be used with other apparatus that vibrate in use, and which may generally be referred to as vibrating apparatus or vibratory apparatus. Examples of other vibrating apparatus with which embodiments of the invention may be used include feeding apparatus, walkways, conveyors, hoppers, crushers, underpans for crushers and other material processing apparatus and accessories.

Further advantageous aspects of the invention will be apparent to those ordinarily skilled in the art upon review of the following description of specific embodiments and with reference to the accompanying description.

### Brief Description of the Drawings

An embodiment of the invention are now described by way of example and with reference to the accompanying drawings in which:
Figure 1 is a perspective view of a vibratory screening apparatus suitable for use with embodiments of the invention, including sensor units that are part of a vibration monitoring system embodying one aspect of the invention;
Figure 2 is an illustration of the screening apparatus of Figure 1 experiencing torsional twisting forces during use;
Figure 3 is an illustration of the screening apparatus of Figure 1 experiencing fishtailing forces during use;
Figure 4 is an illustration of the screening apparatus of Figure 1 experiencing vertically offset forces during use;
Figure 5 is a schematic diagram of an embodiment of a sensor unit of the vibration monitoring system;
Figure 6 is a schematic diagram of an embodiment of the vibration monitoring system;
Figure 7A is a first part of a flow diagram illustrating the preferred operation of the vibration monitoring system; and
Figure 7B is a second part of the flow diagram of Figure 7A.

### Detailed Description of the Drawings

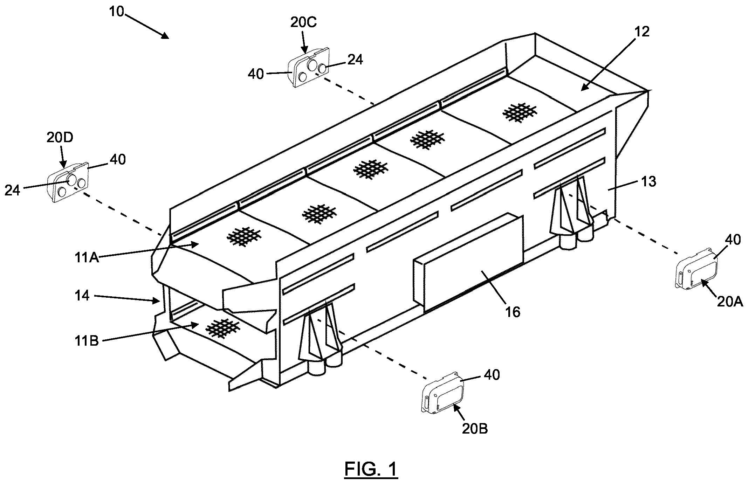

Referring now to Figures 1 to 4 of the drawings there is shown, generally indicated as 10, a screening apparatus suitable for use with embodiments of the present invention. The screening apparatus 10 may be of any conventional type or configuration, i.e. the invention is not limited to use with the particular type or configuration of the illustrated screening apparatus.

Typically, the screening apparatus 10 comprises one or more screening deck 11A, 11B, each deck 11A, 11B comprising screening media (e.g. screening mesh or screening bars) for screening material such as aggregate material (not shown). Screening typically involves separation of particulate material according to particle size. Screening apparatus such as the apparatus of Figure 1 are commonly referred to as screen boxes. The screening apparatus 10 has an inlet 12 at one end and an outlet 14 at the other end. In use, material to be screened is deposited onto the top screening deck 11A via the inlet 12 whereupon relatively small particles pass through the top screening deck 11A onto the lower screening deck 11B while larger particles remain on the top deck 11A. The particles that remain on the top deck 11A travel along the top deck 11A and exit the apparatus 10 via the outlet 14, may be deposited onto a conveyor (not shown) or a chute (not shown) or otherwise collected by any suitable means. Of the particles that fall onto the lower deck 11B, relatively small particles pass through the lower deck 11B while larger particles remain on the top deck 11A. The particles that remain on the lower deck 11B travel along the lower deck 11B and exit the apparatus 10 via the outlet 14, may be deposited onto a conveyor (not shown) or a chute (not shown) or otherwise collected by any suitable means. The particles that pass through the lower deck 11B may be deposited onto a conveyor (not shown) or a chute (not shown) or otherwise collected by any suitable means.

In order to facilitate screening, the apparatus 10 includes a drive system 16 (only its cover is visible) for causing the screening apparatus 10 to vibrate. When vibrating, the screening apparatus 10 (or other vibratory apparatus as applicable) moves in a reciprocating or oscillatory manner, which may be linear or orbital (e.g. circular or elliptical), and the drive system 16 may be configured to impart such movements to the apparatus 10. Typically, the drive system 16 causes the screening apparatus 10 to vibrate with respect to a base (not shown), usually comprising a frame and/or a chassis. The screening apparatus 10 may be mounted on or coupled to the base in any suitable manner that supports the vibratory movement, e.g. by one or more springs (not shown). The drive system 16 may take any conventional form, typically comprising one or more motor (not shown) configured to drive, or rotate, one or more eccentric mass(es) or out-of-balance wheel(s). The drive system 16 may be referred to as a vibratory drive system. The screening apparatus 10 may be referred to as a vibratory screening apparatus. The drive system 16 may be adjustable to adjust one or more characteristics of the vibrations of the screening apparatus 10. In use, the vibration of the screening apparatus 10 facilitates the separation of material by the screening decks 11A, 11B and the travelling of material along the screening decks 11A, 11B.

Typically, the drive system 16 is located at or near the centre of gravity of the screening apparatus 10. This arrangement tends to generate vibrations of uniform amplitude and acceleration throughout the screening apparatus. In the illustrated embodiment, the drive system 16 is located between the inlet 12 and outlet 14, preferably midway or substantially midway between the inlet 12 and outlet 14. Other locations of the drive system 16 may alternatively be adopted to suit different types of screening apparatus and applications. One option is to offset the drive system to impart vibrations with higher amplitude and acceleration to the feed end 12 of the screening apparatus 10 where material load is at a maximum. Other approaches include locating the drive above/below the screening apparatus, or providing multiple drives at different locations on the screening apparatus, and/or using crank driven leaf spring(s) or resonance drives to effect the desired motion profile.

It will be understood that the invention is not limited to use with screening apparatus and may alternatively be used with other apparatus that vibrate in use, and which may generally be referred to as vibrating apparatus or vibratory apparatus. Such apparatus may vibrate because they include or are coupled to a vibratory drive system (such as the drive system 16), and/or because they are coupled to another vibrating or vibratory apparatus (such as the screening apparatus 10) that vibrates in use and so imparts vibrations to the apparatus being monitored. Examples of other vibrating apparatus with which embodiments of the invention may be used include feeding apparatus, walkways, conveyors, hoppers, crushers, underpans for crushers and other material processing apparatus and accessories.

During use, the vibratory movement of the screening apparatus 10 (or other vibratory apparatus) has characteristics, in particular amplitude, acceleration, velocity and direction(s), any one or more of which it may be desired to monitor. The direction(s) of vibration (and/or any other characteristic(s) of the vibration) may be measured with respect to any suitable reference axis or axes (e.g. comprising

3 Cartesian reference axes (X, Y, Z), or a horizontal axis and/or a vertical axis, and/or one or more axis of the apparatus itself, e.g. longitudinal, transverse or vertical axis). The, or each, direction of the vibrations are sometimes referred to as the screen angle, in particular the dynamic screen angle. The vibrations may be linear, e.g. rectilinear or reciprocating, in which case the vibrations may be along a single axis, or may be circular or elliptical in which case the vibrations may be along multiple axis. It may also be desired to measure the static screen angle, i.e. the angle of apparatus with respect to one or more reference axis when the apparatus is not vibrating.

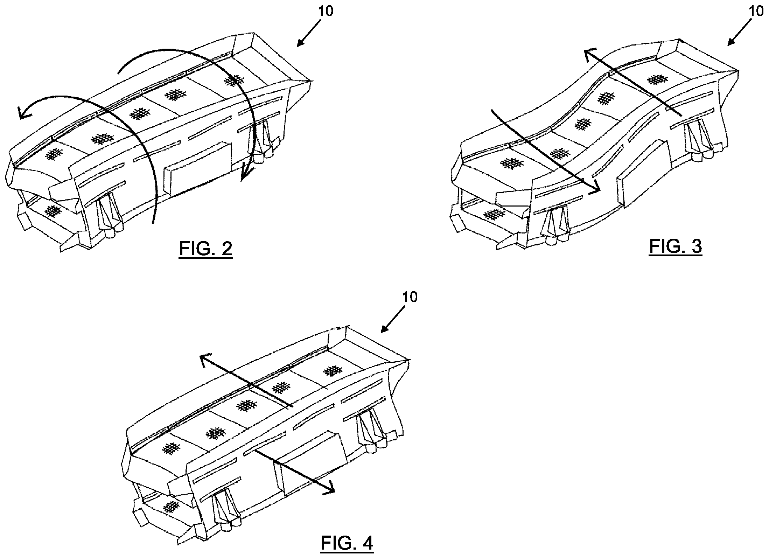

In Figure 1 the screening apparatus 10 is represented in a manner that corresponds to a rest state or a state in which the apparatus 10 is operating under optimal conditions in which the vibrations of the apparatus 10 are in phase. Figure 2 illustrates the screening apparatus 10 during use in an exemplary (undesirable) operating mode in which the vibrational movement of the apparatus 10 coincides with a critical frequency (e.g. a resonant frequency of the apparatus 10) causing a torsional twist along its length. Such twisting forces tend to create motion that is destructive for the apparatus 10 and which increases dynamic stress levels in the structure of the apparatus 10, as well as significantly reducing overall fatigue life of critical connections in the apparatus 10. By way of example, for a typical screening apparatus the mode illustrated in Figure 2 commonly occurs at operating frequencies in the range of 10 - 20Hz, although the frequency range in which undesirable vibrations may occur can vary widely depending on the geometry and structure of the apparatus 10. The mode illustrated in Figure 2 occurs when the screen operating frequency, or a harmonic of same, coincide with inherent structural-related frequencies of the apparatus 10. These critical frequencies are difficult to predict as they are dependent on many variables that are unique to each screen design and assembly, e.g. mass of the screen, mass of the screen media, mass of screened material (which varies during use), stiffness of screen structures and stiffness of bolted and welded connections, and which may vary during the lifetime of the apparatus 10. The mode illustrated in Figure 2 is just one example of many undesirable frequency-dependent operating modes that can arise during use of the apparatus 10. Figures 3 and 4 illustrate two further common examples. In Figure 3, the apparatus 10 is experiencing longitudinal fishtail movement from the feed end to the discharge end. Commonly, the mode of Figure 3 occurs in the operating frequency range 15 - 25Hz, and tends to be less destructive than the torsional twist mode of Figure 2. In Figure 4 the apparatus 10 is experiencing vertical flag movement from top to bottom. Commonly, the mode of Figure 4 occurs in the operating frequency range 20 - 30Hz, also tends to be less destructive than the torsional twist mode. To identify these, and other, undesirable operating modes, it is necessary to make simultaneous vibration measurements from multiple locations on the screening apparatus 10, in particular in order to determine phase information in relation to one or more characteristics of the vibratory movement. Moreover, in order to accurately identify operational modes of interest, the simultaneous measurements must be precisely time-synchronized. For example, assuming that the frequency range in which modes of interest commonly occur has a maximum frequency of 30Hz, then the sampling rate required to obtain the measurement data is 76.8Hz (30Hz x 2.56 according to the Nyquist theorem), which equates to a sampling window of no more than 13ms. The corresponding measurements in each location must be made within the same sampling window, which in this example requires a synchronization precision of 13ms or less. Alternatively, assuming that the frequency range in which modes of interest commonly occur has a maximum frequency of, foe example, 30Hz, then the minimum sampling rate required to obtain the measurement data is 76.8Hz (30Hz x 2.56 according to the Nyquist theorem), which equates to a period between samples of no more than 13ms. The, or each, corresponding measurement in each location are made within the same sampling window (more than one measurement may be taken in each location within each sampling window to improve accuracy), Accordingly, the synchronous measurement timing accuracy is typically a fraction of, or at least less than, the vibration cycle time period to allow phase relationships between vibration cycles of equal frequency at different locations/sensors to be discerned, and as can be seen from the above example may be in the order of milliseconds. In preferred embodiments each sensor unit is configured to take measurements in the same sampling window and/or at the same sampling frequency.

As well as identifying undesirable operational modes (as illustrated by way of example in Figures 2 to 4) vibration monitoring enables other conditions, especially undesirable conditions, of the apparatus 10 to be identified including structural and/or operation conditions, for example any one or more of: assembly defects; quality defects in one or more part of the apparatus; fitting defects relating to one or more part of the apparatus; unbalanced, or out-of-time, movement of rotational part(s) (e.g. drive parts), unbalanced or twisted parts of the apparatus (e.g. the screen structure); uneven loading of one or more part of the apparatus (e.g. the screen); blockage or contamination of one or more parts of the machine (e.g. material stuck in the screen or a chute); failure of one or more part of the apparatus (e.g. spring failure).

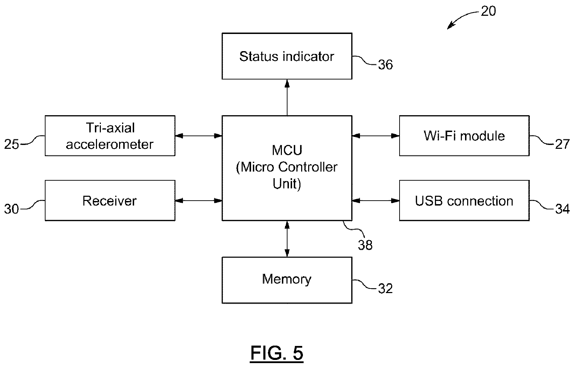

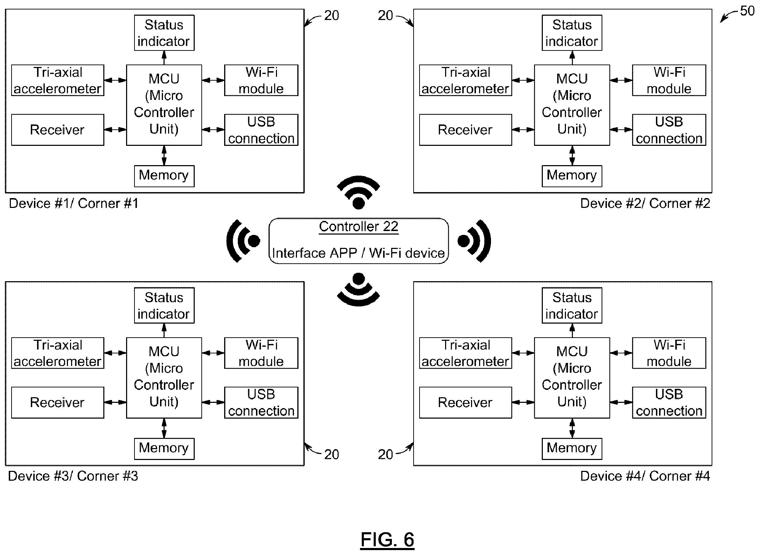

The vibratory movement of the screening apparatus 10 (or of any other vibrating apparatus) may be monitored by a monitoring system 50 embodying one aspect of the present invention. With reference in particular to Figures 5 and 6, the monitoring system 50, which in preferred embodiments may be referred to as a vibration monitoring system or a condition monitoring system, comprises a plurality of sensor units 20 for mounting on the screening apparatus 10. The sensor units 20 are separate from each other so that they can be located at respective different locations on the apparatus to be monitored. The sensor units 20 are preferably removably mountable on the apparatus 10. Any conventional removable attachment means may be used for this purpose, but in preferred embodiments each sensor unit 20 is provided with one or more magnet 24 for removably mounting the sensor unit 20 on the apparatus 10 (which is typically at least partly formed from steel or other magnetic-compatible metal). In use, each sensor unit 20 is mounted on the screening apparatus 10 (or any other vibrating apparatus as applicable) at a respective desired location, and preferably also in a desired orientation and/or alignment with respect to the apparatus 10, in particular such that the, or each, sensing axis is aligned in a desired manner. In alternative embodiments, the sensor units may be permanently fixed to, or incorporated into, the apparatus to be monitored.

Optionally, the monitoring system includes a respective locating device (not shown), e.g. comprising a frame, bracket or other structure(s), for each sensor unit 20. Each locating device is configured to receive the respective sensor unit 20. The preferred arrangement is such that each locating device and its respective sensor unit 20 fit together, or couple, with each other. Advantageously, each locating device and the respective sensor unit 20 are each configured so that each sensor unit 20 can only be coupled with, fitted to, or otherwise received by the respective locating device. This may be achieved by providing each sensor unit 20 and its respective locating device with corresponding mating formations, e.g. one or more set of corresponding male and female mating formations, that allow each sensor unit 20 to be coupled or fitted only to its respective locating device, i.e. not to any of the other locating device(s) included in the monitoring system (at least when the sensor unit is in the correct orientation). In preferred embodiments, each locating device is configured such that, when the respective sensor unit 20 is coupled thereto, the sensor unit 20 is in a desired orientation and/or alignment with respect to the apparatus 10, in particular such that the, or each, sensing axis is aligned in a desired manner.

The monitoring system 50 comprises at least two sensor units 20. Each sensor unit 20 is mounted, in use, at a respective location on the apparatus 10. Preferably, each sensor unit 20 is spaced apart from the, or each, other sensor unit 20 along at least one of the main orthogonal axes of the apparatus 10 (i.e. the longitudinal axis that runs in a direction from the inlet 12 to the outlet 14 in this example, the transverse axis that runs perpendicular to the longitudinal axis in a side-to-side direction, and the vertical axis). In preferred embodiments, each sensor unit 20 is spaced apart from the, or each, other sensor unit 20 along at least one of the longitudinal and transverse axes. Each sensor unit 20 is preferably spaced apart from the geometric centre or centre of mass of the apparatus 10 since the effects of the vibrations tend to increase with distance from the geometric centre or centre of mass. It is preferred to locate each sensor unit 20 on the main body 13 of the apparatus 10 rather than, for example, on a peripheral component such as a feeder, conveyor or chute since peripheral components may be affected by the vibrations in a manner that is not representative of the vibration of the apparatus 10 itself.

In preferred embodiments, the monitoring system 50 comprises four sensor units 20A, 20B, 20C, 20D, although in alternative embodiments, the monitoring system 50 may comprise more than four or fewer than four sensor units. In use, the sensor units 20A-20D are spaced apart around the apparatus 10, preferably in a symmetric manner, e.g. with respect to the longitudinal and/or transverse axes of the apparatus 10. Preferably, sensor units 20A and 20B are located on one side of the apparatus 10 and sensor units 20C and 20D are located on the other side. Sensor units 20A and 20C are preferably located at or adjacent the inlet 12, or feed end, and sensor units 20B and 20D are preferably located at or adjacent the outlet 14, or discharge end. The sensor units 20A-20D may be located at the same or substantially the same vertical level. Typically, the main body 13 of the apparatus 10 is box-like in shape (in particular a generally square or rectangular box) and each sensor unit 20 is located at or adjacent a respective corner of the body 13. Conveniently, as illustrated in Figure 1, the sensor units 20A-20D are located at or adjacent a respective suspension location, i.e. the locations where respective suspension springs (not shown) are provided. More generally, the sensor units 20 are, in use, spaced apart with respect to each other on the apparatus 10. The sensor units 20 may be spaced apart from any one or more of the geometrical centre, centre of gravity and/or vibrational centre of the apparatus. The sensor units 20 are preferably symmetrically arranged with respect to one or more of the main axes of the apparatus 10.

The monitoring system 50 comprises a system controller 22 configured to receive data indicative of or otherwise relating to the, or each, measurement taken by each sensor unit 20 during use. At least one of, and preferably all of, the sensor units 20 are capable of communicating with the controller 22, e.g. by a wired or wireless communication link. In preferred embodiments the communication link is wireless (preferably WiFi (trade mark) but alternatively any other wireless link, e.g. a Bluetooth (trade mark) link or RF link), and the controller 22 and sensor units 20 include corresponding conventional wireless communication means (represented in Figures 5 and 6 by WiFi modules 27). In preferred embodiments the sensor units 20 and controller 22 are configured to communicate with each other wirelessly (for example via WiFi (trade mark) or other wireless LAN communication, Bluetooth (trade mark) or other personal area network (PAN) wireless communication, Zigbee (trade mark) or other wireless sensor network communication), and to this end the controller 22 and sensor units 20 include corresponding conventional wireless communication means (represented in Figures 5 and 6 by WiFi modules 27) for supporting wireless communication.

Each sensor unit 20 is capable of communicating with at least one other sensor unit 20, optionally with all other sensor unit(s) 20, as is required to effect the system's operation, e.g. via a wired or wireless communication link, as for example is described in more detail hereinafter. The sensor units 12 are preferably configured to communicate with each other (as applicable) via wireless communication links. In preferred embodiments the wireless communication links are preferably WiFi (trade mark) but alternatively any other wireless link, e.g. a Bluetooth (trade mark) link or RF link, and the sensor units may be equipped accordingly. More generally, the sensor units 12 may be configured to communicate with each other (as applicable) wirelessly (for example via WiFi (trade mark) or other wireless LAN communication, Bluetooth (trade mark) or other personal area network (PAN) wireless communication, Zigbee (trade mark) or other wireless sensor network communication), and to this end the sensor units 20 include corresponding conventional wireless communication means for supporting wireless communication. Wi-Fi (or other wireless LAN communication) is preferred in embodiments where the system 50 is intended for using with screening apparatus and the like due to the size of the apparatus (and therefore the required communication range), the signal interference that the steel composition of the apparatus creates, and the data volume to be transmitted. It is preferred that the wireless communication links are direct links (as opposed to being, i.e. not being, via a router (in particular a separate, or external, router), gateway (in particular a separate, or external, gateway), access point (in particular a separate, or external, access point) or internet connection), e.g. comprising peer-to-peer wireless communication, or configuring one or more of the sensor units 20 and/or the controller 22 to provide a mobile hotspot or a wireless access point or to support tethering. In preferred embodiments, therefore the sensor units 20 and/or the controller 22, as applicable, are configured to communicate directly with each other, as required, without using a separate, or independent, communication network, e.g. an external communication network or a communication network supported by components other than the sensor units 20 and/or the controller 22. The sensor units 20 and/or the controller 22 may be configured to support any suitable conventional wireless protocols, including, but not limited to, WiFi, Bluetooth, Zigbee, NFC, RFID and so on.

The sensor units 20 may be configured to send measurement data to the controller 22 and/or receive control information from the controller 22 and/or each other as required. The controller 22 may comprise any suitably configured computing device, e.g. a tablet computer, a smartphone, a laptop computer, a PC or a dedicated computing device. The controller 22 typically includes a user interface (not illustrated) by which a user is able to operate the system 50, e.g. cause the sensor units 20 to take measurements and/or cause the sensor units 20 to send measurement data to the controller 22. The user interface is conveniently provided by a computer program (e.g. an App or other application software) running on the controller 22 for operating the system 50. The controller 22 and/or other computing device, as applicable, may be programmed and/or otherwise configured to perform analysis of the measurement data as required by the application, e.g. in order to assess the operating performance and/or structural conditional of the apparatus 10 and/or other condition(s) of interest relating to the apparatus 10. The analysis may be conventional and may vary from application to application. Typically, analysis of the measurement data is based on known or assumed characteristic(s) of each sensor unit 20, including any one or more of: the location of the sensor unit 20 with respect to the apparatus 10 or with respect to each other; the orientation of the sensor unit 20; and/or the alignment of the sensor unit 20 with respect to one or more reference axis and/or with respect to each other. In order to provide accurate analysis of the measurement data received from the sensor units 20, it is desirable that each sensor unit 20 is located in a desired location; oriented in a desired orientation; and/or aligned in a desired alignment with respect to one or more reference axis, and/or with respect to each other, as applicable for the analysis.

Each sensor unit 20 comprises at least one sensor 25 (Figure 4), preferably at least one vibration sensor, and as such in preferred embodiments the sensor units may be referred to as vibration sensor units. The, or each, vibration sensor 25 may be of any conventional type, for example comprising one or more accelerometer, piezoelectric vibration sensor, MEMs vibration sensing device, velocity sensor, proximity probe, laser sensor or eddy current vibration sensor. The sensor unit 20 may be configured to sense vibrations along a single axis. Preferably, however, the sensor unit 20 is configured to sense one or more characteristic (in particular acceleration, velocity and/or amplitude or displacement) of vibrations along more than one axis, in particular more than one mutually perpendicular axis. It is particularly preferred that the sensor unit 20 is configured to sense one or more characteristic (in particular acceleration, velocity and/or amplitude or displacement) of vibrations along three mutually perpendicular axis (i.e. the X, Y and Z axes, or any 3 Cartesian reference axes), which is commonly referred to as tri-axial vibration sensing and such sensors are commonly referred to as tri-axial vibration sensors or tri-axial accelerometers. This may be achieved in any conventional manner, for example using a respective vibration sensor oriented to sense vibrations along a respective axis, or using a single vibration sensor that is capable of sensing vibrations along multiple axes.

When the sensor units 20 are mounted on the apparatus 10, it is desirable for the, or each sensing axis of each sensor unit 20 to be aligned correctly with respect to one or more reference axis (which may be an axis of the apparatus 10, e.g. the longitudinal, transverse and/or vertical axis of the apparatus 10, and/or global horizontal and/or vertical axes), or at least to be in a known disposition or alignment with respect to the relevant reference axis/axes. It is also desirable for the orientation of the sensor units 20, and therefore of the sensing axis, or axes, to be known with respect to the reference axis/axes or direction(s). It is desirable for the sensor units 20 to be in a known alignment and/or orientation with respect to each other. This may be derived from the known alignment and/or orientation, respectively, of the sensor units 20 with respect to the relevant reference axis or axes. For example, it may be desired to mount the sensor units 20 on the apparatus 10 such that the units 20 are all in the same orientation and/or so that the respective corresponding sensing axis, or axes, of each sensor unit 20 are parallel with each other.

Referring in particular to Figure 5, in preferred embodiments each sensor unit 20 includes a receiver 30, or other communication device, for communicating, preferably directly, with an external reference time source (not illustrated), e.g. an external reference clock such as the GPS clock, or an International Atomic Time (TAI) source, a UTC source or the Time from NPL (MSF) time reference. Conveniently, the receiver 30 comprises a GPS receiver or other satellite receiver, but may comprise any other suitable type of wireless (e.g. RF) receiver or transceiver for communicating with the relevant external reference time source. Each sensor unit 20 typically includes one or more memory unit 32 for storing measurement data. Each sensor unit 20 typically includes a power source (not shown), e.g. one or more battery (preferably rechargeable), for powering the sensor unit 20. Optionally, a communication port 34 (e.g. a USB port or other port for wired connection) is provided to allow communication with external device(s) (not shown), e.g. for programming and/or data acquisition, and/or for battery charging. Optionally, each senor unit 20 includes a status indicator 36, e.g. comprising one or more lamp or display. Each sensor unit 20 typically includes a unit controller 38, e.g. a microcontroller or other programmable controller, programmed or otherwise configured to control the operation of the unit 20.

Each sensor unit 20 typically comprises a housing 40 that contains the sensor(s) 25 and any other electrical or electronic component(s) and/or circuitry required by the sensor unit 20, e.g. to support operation of the sensor(s) 25, for data storage and/or communication with the controller 22 and/or with each other as required. The housing 40 may be referred to as the body of the sensor unit 20 and may take any suitable form, typically comprising a rigid enclosure or casing, and may be formed from any suitable material, e.g. plastics or metal. The housing 40 is typically box-like in shape (in particular a generally square or rectangular box).

The monitoring system 50 is operable such that each sensor unit 20 makes at least one respective measurement simultaneously, or more particularly within the same sampling window. As such the system 50 can obtain simultaneous measurements in multiple different locations, which in turns allows operation modes of interest to be identified as outlined above. Each sensor unit 20 must take its respective corresponding measurement(s) within the same sampling window. Since the sampling window is typically small (e.g. 13ms or less in the example provided above), in order to achieve the required synchronisation precision each sensor unit 20 synchronizes with a common (i.e. the same), and typically external, clock or other reference time source prior to making the respective measurement. In preferred embodiments, each sensor unit 20 achieves this by using its receiver 30 to synchronize itself with an external clock, conveniently the GPS clock or an International Atomic Time (TAI) source, with the result that the sensor units 20 are synchronized with each other. The sensor units 20 may synchronize their own internal clock (not shown but typically part of, or accessible by, the respective unit controller 38) with the external clock or other external reference time source. In alternative embodiments, the sensor units 20 may be configured to synchronize with each other using any other conventional clock synchronization means, for example using clock-sampling mutual network synchronization (CS-MNS), Inter-range Instrumentation Group time codes, Network Time Protocol (NTP), Precision Time Protocol (PTP), or the Reference Broadcast Time Synchronization (RBS) algorithm.

In preferred embodiments, the monitoring system 50 has four sensor units 20A-20D arranged around the screening apparatus 10, preferably symmetrically, and preferably such that there are two sensor units 20 at each side of the apparatus 10 and two sensor units 20 at each end of the apparatus. This arrangement allows the monitoring system 50 to measure the relevant characteristic(s) of the vibratory movement simultaneously at different locations that facilitate identification of the modes of interest (such as the modes illustrated in Figures 2 to 4), and is particularly suitable for vibratory screening apparatus 10. In Figure 6, the sensor units 20A-20D are labelled Device #1 - Device #4 respectively. More sensor units 20 may be provided so that measurements can be taken simultaneously at more than four locations, which can improve the monitoring system's ability to identify and/or characterize modes of interest. More generally, in alternative embodiments (not illustrated) more or fewer sensor units 20 may be used, and their locations may differ from those described herein as suits the application.

In preferred embodiments, which preferably have at least four sensor units 20, the monitoring system 50 can determine from the respective simultaneous measurements phase relationships between the movement of the apparatus 10 at the respective sensor unit locations, and can use the measurements, including the phase relationships as applicable, to determine if the screening apparatus 10 is operating at or near a critical frequency and/or to identify the mode that the screening apparatus 10 is experiencing. For example, the mode illustrated in Figure 2 may be identified by a 180 degrees phase shift left to right at the feed end of the screening apparatus together with the inverse of this phase shift at the discharge end, predominantly measured in the vertical direction, while the mode illustrated in Figure 3 may be identified by in-phase motion in the left to right direction at the feed end that is 180 degrees out of phase with the same measurements at the discharge end of the screen, when measured in the lateral direction.

In addition to being preferred locations for identifying phase differences in the movement of the screening apparatus 10, the preferred four measurement locations as illustrated Figure 1 are also well suited for enabling the monitoring system 50 to monitor the orbit of the screening apparatus' movement and to detect signs of wear or damage in the screening apparatus' structure. The corners of the screening apparatus 10 typically have a confluence of components and vibration profiles available to be deciphered. For example, a broken spring may easily be detected by an abnormal and erratic vibration profile measured at the suspension corner. Other components of interest would include, screen media, tensioning assemblies, structural connections, and so on. In addition, the preferred locations are generally the most accessible points on a screen due to the structural nature of the support system below the suspension. Furthermore, the magnitude of primary unbalance is typically more prominent towards the extremities of the structure, furthest from mass centre/drive centre.

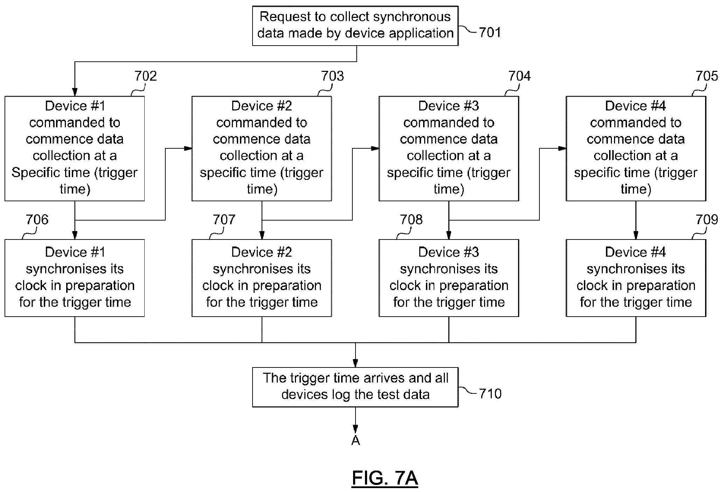

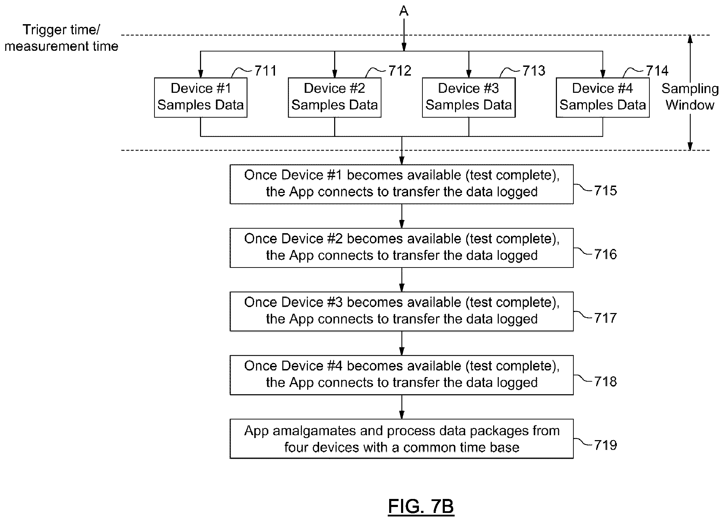

The preferred operation of the vibration monitoring system 50 is now described with reference to Figures 7A and 7B. Typically the system 50 is activated to take one or more measurement in response to an activation request (701). The activation request may be initiated by a user via the controller 22, e.g. using the user interface provided by a computer program running on the controller 22. The activation request is communicated to at least one of the sensor units 20, typically by a corresponding wireless signal transmitted by the controller 22. Optionally, the activation request is communicated from the controller 22 to only one of the sensor units 20A, which may be designated as the master sensor unit. The master sensor unit 20A is configured to cause the activation request to be communicated to the other sensor units 20B-20D, preferably by means of corresponding wireless command signal(s). The master sensor unit 20A may communicate the activation request directly to each other sensor unit 20B-20D (simultaneously or in sequence as desired), or indirectly via one or more of the other sensor units 20B-20D. For example, the master sensor unit 20A may communicate the activation request to one 20B of the other sensor units 20B-20D, which may in turn communicate the activation request to another 20C of the other sensor units 20C-20D, which may in turn communicate the activation request to the remaining sensor unit 20D, i.e. the activation request may be communicated from one sensor unit 20 to another sensor unit 20 unit all of the sensor units 20 have received it. The arrangement whereby the sensor units communicate with each other can be advantageous in applications where some of the sensor units are located relatively far from the controller (e.g. if the apparatus 10 is relatively large) and/or in which the nature of the apparatus 10 and/or the environment creates interference that may adversely affect direct communication between the controller and the sensing units. In preferred embodiments, the controller 22 is configured to communicate the activation request directly to all of the sensor units 20A-20D (simultaneously or in sequence as desired). In such embodiments, the sensor units 20A-20D are advantageously not required to communicate with each other. Also, in such preferred embodiments there is no need to designate any of the sensing units 20A-20D as the master sensing unit. In any event, it is preferred that communication between the sensor units 20 (if supported), and between the sensor units 20 and the controller 22, is performed wirelessly, not least because this facilitates installation and removal of the system 50 with respect to the apparatus 10.

In response to receiving the activation request, the sensor units 20A-20D synchronize with each other (706 - 709). In preferred embodiment, in response to receiving the activation request, each sensor unit 20A-20D synchronizes its internal clock with the external clock such that the sensor units 20A-20D are synchronized with each other. Once synchronized, the sensor units 20A-20D are ready to make their respective measurements.

Each sensor unit 20A-20D is also provided with a measurement time (denoted by "trigger time" in Figures 7A and 7B) at which the requested measurement is to be made by all of the sensor units 20, i.e. the same measurement time is provided to each sensor unit 20. In preferred embodiments, the measurement time is determined by the controller 22 and communicated directly to all of the sensor units 20A-20D (simultaneously or in sequence as desired) by the controller 22. Alternatively, the measurement time may be communicated to the master sensor unit 20A by the controller 22 and subsequently communicated to the other sensor units 20B-20D by the master unit 20A in the manner described above. In alternative embodiments, the measurement time is determined by the master sensor unit 20A in response to receiving the activation request and subsequently communicated to the other sensor units 20B-20D by the master unit 20A in the manner described above.

The controller 22 or master sensor unit 20A, as applicable, may calculate the measurement time depending on how long it takes for the activation request to be communicated to all of the sensor units 20A-20D and for all of the sensor units 20A-20D to synchronise themselves with the reference clock (or otherwise to synchronize their internal clocks with each other), i.e. the measurement time is set sufficiently far in the future (e.g. with respect to the time at which the activation request is initiated, or issued by the controller 22 or received by the sensor unit 20A or with respect to another suitable start time relative to the activation request) to allow the sensor units 20A-20D to synchronize with each other. Depending on the embodiment, the measurement time may for example be set in the order of milliseconds or seconds after the activation request is initiated, issues or is received. Once the measurement time is determined, it is communicated to the sensor units 20A-20D. This may be performed directly or indirectly as described above. Conveniently, the measurement time is communicated with the activation request.

When the sensor units 20A-20D have the measurement time and are synchronized in time with each other, they are ready to take their respective measurement(s). As indicated above, the configuration of the system is such that the sensor units 20A-20D are ready to take their respective measurement(s) before the designated measurement time. When the measurement time arrives, each sensor unit 20A-20D takes its respective measurement(s) (710-714). Typically, each sensor unit 20 takes a single measurement (but which may comprise multiple measurement values), but may alternatively take more than one measurement, e.g. a plurality of measurements spaced apart in time with respect to the measurement time. The measurement(s) taken by each sensor unit 20A-20D may depend on the number and type of sensor(s) 25 included in the sensor unit 20A-20D. Each measurement may comprise one or more measurement value. For example, in the case where the sensor 25 is a tri-axial accelerometer, each measurement may comprise three measurement values, one for each measurement axis, while in cases where the sensor unit has more than one accelerometer each aligned with a respective different axis, the measurement may comprise multiple measurement values, one from each accelerometer. Taking the measurement(s) typically involves capturing the output(s) from the respective sensor(s) 25, and preferably recording the corresponding measurement data, e.g. in memory 32. Because the sensor units 20A-20D are synchronized in time with each other, the respective measurements are made simultaneously, or substantially simultaneously, i.e. within the same sampling window. In preferred embodiments, the sampling window begins at the determined measurement time.

Once the respective measurement data has been obtained, it is communicated to the controller 22 (715-718). This may be performed immediately or at any convenient time. In preferred embodiments, the controller 22 communicates with each sensor unit 20A-20D individually to obtain the respective measurement data. For example, the controller 22 (more particularly the computer program running on the controller 22) may be configured to obtain the measurement data when it becomes available, and/or the user may operate the controller 22 to obtain the measurement data, e.g. using the user interface provided by a computer program running on the controller 22. In alternative embodiments, the measurement data may be communicated from the sensor units 20B-20C to the master sensor unit 20A, and then to the controller 22 from the master sensor unit 20A.

The synchronized measurement data retrieved from each of the sensor units 20A-20D may be used collectively to analyse the operation and/or condition of the apparatus 10 as outlined above (719). The analysis may be performed by the controller 22 and/or by any other computing device as desired, and may be performed in real time or at any other convenient time. The data and/or results of the analysis of the date may be displayed via a user interface. Because the measurement data from each sensor unit 20A-20D relates to the same, precise sampling window and/or measurements taken at the same sampling frequency, the analysis is able to accurately detect and/or identify operational modes and/or other characteristics of the operation and/or condition of the apparatus 10, in particular mode(s), condition(s) or other characteristic(s) that can be detected or identified by one or more aspect of vibratory movement(s) of the apparatus 10.

From the foregoing, it will be apparent that, in preferred embodiments, the system 50 is a data collection system comprising a plurality of independent sensor units 20, and supports a synchronising mode in which the sensor units 20 are synchronised with each other in order to obtain synchronised measurement data, in particular vibration measurement data.

In preferred embodiments, each sensor unit 20 is primed by a wirelessly (preferably Wi-Fi) delivered request directly or indirectly from an app or program running on a remote controller 22. The trigger test time, or measurement time, is calculated and communicated to the sensor units 20. In response to the activation request, the sensor units 20 synchronize with each other using a reliable time source e.g. a satellite time source, or other synchronization means.

To make the system 50 portable and user-friendly, the use of an external router (and/or other external networking device(s)/means e.g. gateway(s), access point(s) and/or internet connection(s)) is preferably omitted. As such, the controller 22 and sensor unit(s) 20 are configured to enable the controller 22 to communicate with at least one of, and preferably all of the sensor units 20 via a direct wireless communication link, e.g. a WiFi link. Similarly, in embodiments where the sensor units 20 can communicate with each other, they are preferably configured to communication with each other via direct wireless communication links, e.g. WiFi links. In alternative embodiments, the controller 22 and sensor units 20 may communicate with each other (as applicable) via a wireless communication network supported by a wireless router (and/or other networking means). However, this arrangement complicates the installation of the system 50 in applications in which the apparatus 10 does not already support such a communication network, or limits the system 50 to use with apparatus 10 that already support such a communication network. Preferred embodiments are advantageous over alternative approaches, for example using hard wired systems or systems incorporating a tachometer to synchronise data collection or using WiFi signals to synchronise data collection, in terms of the precision with which synchronisation can be achieved, and the simplicity of installation/removal.

In use, a typical operation of the system 50 may involve a user making, via a user interface on the App or other software running on the controller 22, a request for measurements to be taken, or for a particular analysis, e.g. orbital analysis, to be performed. In response to this activation request, the controller 22 communicates with each sensor unit 20, typically one at a time, providing a command to take the relevant measurement(s) at the determined measurement time. Each sensor unit 20 synchronises its internal clock in preparation for the measurement time. Once the measurement time arrives, all of the sensor units 20 obtain the relevant measurement data. When the measurements are complete, the controller 22 (e.g. via the App) connects to each sensor unit 20, typically one at a time, to obtain the respective measurement data from each sensor unit. The App, or other computer program(s), may amalgamate or otherwise analyse the respective measurement data, which has been taken in respect of a common and accurate time stamp, to provide synchronous results from each of the sensor unit 20 locations.

In preferred embodiments, rather than being activated to take a measurement directly by the controller 22, each sensor unit 20 is firstly primed (readied) to collect data. The master unit 20A provides the test trigger time to the slave units 20B-20D. The test trigger time is calculated to provide a sufficient buffer to allow for WiFi (or other wireless) communications to be received and actioned by the most distanced/attenuated slave sensor unit 20B-20D. Each sensor unit 20A-20D synchronises its internal clock via a suitably accurate timing reference e.g. a satellite time source, or other synchronization means. The synchronization is such that the data is gathered in a suitably accurate fashion. This provides the system 50 with a sufficiently high frequency response to enable identification of, in particular, phase-related characteristics of the apparatus 10.

The invention is not limited to the embodiment(s) described herein but can be amended or modified without departing from the scope of the present invention.

## Claims

1. A vibration monitoring system comprising a plurality of sensor units, each sensor unit comprising at least one vibration sensor and being locatable on an apparatus to be monitored at a respective different location, wherein each sensor unit is operable to take measurements using the respective at least one vibration sensor, the system being configured to cause each sensor unit to take a respective measurement simultaneously, and wherein the sensor units are configured to synchronize with each other before taking the respective measurement.

2. The system of claim 1, wherein the system is configured to generate an activation request and to communicate the activation request to each of the sensor units, and wherein, in response to receiving the activation request, each sensor unit is configured to synchronize with the, or each, other sensor unit.

3. The system of claim 1 or 2, wherein the system is configured to generate a measurement time and to communicate the measurement time to each of the sensor units, and wherein each sensor unit is configured to take the respective measurement at the measurement time.

4. The system of claim 3 when dependent on claim 2, wherein the system is configured to set the measurement time to occur after the generation of said activation request by a period of time that allows the sensor units to synchronize with each other before taking the respective measurement, wherein, optionally, the system is configured to generate the measurement time in response to generation of the activation request, or in response to receipt of the activation request by one or more of the sensor units, and wherein, optionally, said measurement time is generated by one of the sensor units, and preferably communicated to the, or each, other sensor unit directly or indirectly by said one of the sensor units, wherein, optionally, said activation request is received by said one of the sensor units and communicated to the, or each, other sensor unit directly or indirectly by said one of the sensor units.

5. The system of any preceding claim, further including a controller, the controller being configured for communication, preferably wireless communication, with at least one of, and preferably all of, the sensor units, and wherein the controller is preferably separate from the sensor units, for example comprising a separate computing device, preferably a separate portable computing device, for example a smartphone, a tablet computer or a laptop computer.

6. The system of claim 5, wherein the controller is configured for wireless communication with at least one of, and preferably all of, the sensor units via a direct wireless communication link, preferably a WiFi link or other wireless LAN link, advantageously without using external or separate communication networking means.

7. The system of claim 5 or 6 when dependent on claim 2, wherein the controller is configured to generate said activation request and to communicate said activation request to at least one of said sensor units, preferably to all of said sensor units, and wherein, typically, the controller is configured to generate said activation request in response to user input.

8. The system of any preceding claim, wherein the sensor units are configured to synchronize with each other by synchronizing with an external reference time source, and wherein each sensor unit preferably includes means for communicating with the external reference time source, e.g. a GPS receiver or other wireless receiver or transceiver, and wherein, preferably, each sensor unit has an internal clock, and is configured to synchronize with the, or each, other sensor unit by synchronizing the internal clock with the external time reference source.

9. The system of any preceding claim, wherein each sensor unit is configured to take the respective measurement within a sampling window, the sampling window being the same for each sensor unit, and/or at the same sampling frequency, and wherein, preferably the sampling window is defined with respect to a measurement time, preferably beginning at said measurement time.

10. The system of any preceding claim, wherein each sensor unit is configured for wireless communication with at least one other sensor unit, preferably via a direct wireless communication link, advantageously without using external or separate communication networking means, and wherein the wireless communication is preferably WiFi communication or other wireless LAN communication, and/or wherein the controller is configured for wireless communication with at least one of, and preferably all of, the sensor units via a direct wireless communication link, advantageously without using external or separate communication networking means, and wherein the wireless communication is preferably WiFi communication or other wireless LAN communication.

11. The system of any preceding claim, wherein the system is configured to use the respective measurements from at least one of, preferably at least two of, and optionally all of, the sensor units to analyse the operation and/or condition of the apparatus being monitored, for example to determine if the apparatus is operating at or near to a designated critical frequency, and/or to identify an operational mode of the apparatus, and/or wherein the system is configured to use the respective simultaneously taken measurements from two or more of the sensor units to determine one or more phase relationship between movement of the apparatus at the respective sensor unit locations.

12. The system of any preceding claim installed on an apparatus to be monitored, wherein each sensor unit is removably mounted on the apparatus at a respective different location, and wherein, optionally, the apparatus is a screening apparatus or other vibratory apparatus.

13. A monitoring method using a vibration monitoring system comprising a plurality of sensor units, each sensor unit comprising at least one vibration sensor and being operable to take measurements using the respective at least one vibration sensor, the method comprising:
locating each sensor unit at a respective different location on an apparatus to be monitored;
causing each sensor unit to take a respective measurement simultaneously; and
causing the sensor units to synchronize with each other before taking the respective measurement.

14. The monitoring method of claim 13, wherein said causing the sensor units to synchronize with each other involves causing the sensor units to synchronise with an external reference time source.

15. The monitoring method of claim 13 or 14, including using the respective measurements from at least one of, preferably at least two of, and optionally all of, the sensor units to analyse the operation and/or condition of the apparatus being monitored, for example to determine if the apparatus is operating at or near to a designated critical frequency, and/or to identify an operational mode of the apparatus, and/or using the respective simultaneously taken measurements from two or more of the sensor units to determine one or more phase relationship between movement of the apparatus at the respective sensor unit locations.
